Europäisches Patentamt

European Patent Office

Office européen des brevets

(19)

(11) Publication number: **0 167 287**
**A1**

(12) **EUROPEAN PATENT APPLICATION**

(21) Application number: **85303895.8**

(22) Date of filing: **03.06.85**

(51) Int. Cl.⁴: **F 16 D 23/14**

(30) Priority: **07.06.84 GB 8414507**
**10.01.85 GB 8500602**

(43) Date of publication of application:
**08.01.86 Bulletin 86/2**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Ball, Robert Jolyon**
**16 Dadglow Road Bishops Itchington**
**Leamington Spa Warwickshire CV33 OTG(GB)**

(72) Inventor: **Winters, John Joseph**
**5809 143rd Street SW**
**Edmonds Washington 98020(US)**

(74) Representative: **Adkins, Michael et al,**
**Withers & Rogers 4 Dyer's Buildings**
**Holborn London, EC1N 2JT(GB)**

(54) **A friction clutch for a motor vehicle.**

(57) A friction clutch for a vehicle which includes a bayonet-type fixing (24, 25) for simple assembly and disassembly in use.

FIG.1

EP 0 167 287 A1

Croydon Printing Company Ltd.

## A FRICTION CLUTCH FOR A VEHICLE

The invention relates to a friction clutch for a vehicle.

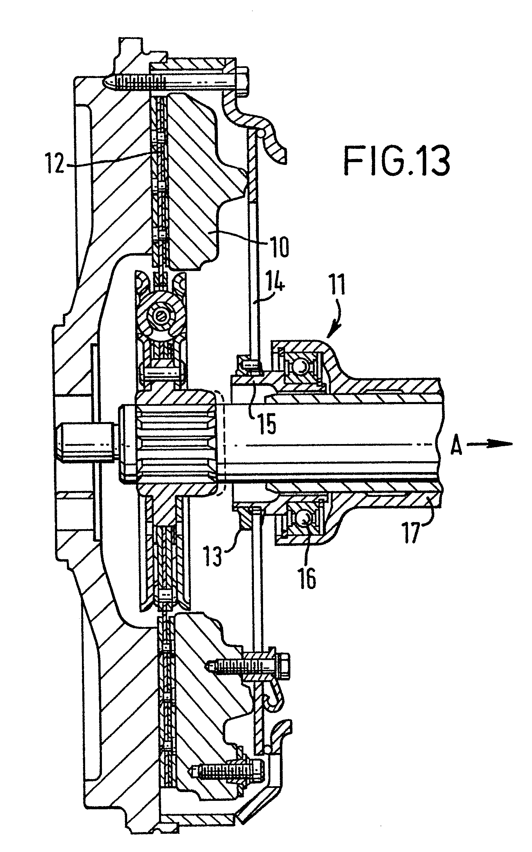

Various types of clutches for motor vehicles have been proposed over the years. Figure 13 of the accompanying drawings illustrates a typical prior art pull clutch arrangement where a clutch pressure plate 10 is retracted by a clutch release mechanism 11 to release the clutch driven plate 12. Clutch release is effected by applying a pull force in direction A to the hub 13 of a clutch spring 14 through a short hollow shaft 15, clutch release bearing 16 and a clutch release member 17. The clutch releasing force is applied by means of a release fork (not shown) which engages the clutch release member 17.

The present invention is concerned with a friction clutch of the foregoing pull type having an improved clutch release mechanism.

A vehicle clutch in use transmits rotational drive from the vehicle engine to the gear assembly, and needs to be constructed to ensure reliable operation over long periods. Such clutches are therefore manufactured to be robust and reliable in operation, but in consequence are often relatively bulky and awkward to manoeuvre accurately into position during assembly, and thereafter difficult to connect. Furthermore, in order to service the clutch after prolonged usage, it is necessary to provide access sufficient to permit the clutch to be disconnected.

It is thus an object of the invention to provide a friction clutch having a "snap" connection. It is a further ojbect of the invention to make the friction clutch self-indexing to ensure accurate presentation during installation.

It is a feature of our invention to provide the use of a bayonet sleeve; such sleeve reduces the need to machine the various precision components currently used, and requires only a minimum radial space. The sleeve permits simple detachment when the clutch release mechanism of which it forms a component needs to be disconnected for servicing of the friction clutch.

According to the invention there is provided a friction clutch for a vehicle having a friction plate, means to press the friction plate in a first direction parallel to the clutch axis, clutch release means, and pull means to withdraw the clutch release means in a direction opposed to said first direction characterised in that the clutch release means includes first and second members, one of the members defining a recess, the other of the members having a projection, the projection being receivable in the recess upon relative axial movement between the members, the recess having a first portion extending from one edge of the member at an angle to the said axis and a second portion at a larger angle to said axis, said second section including a retainer surface to inhibit disengagement of the projection from the recess on application of axial pull clutch forces, the second portion being dimensioned to permit lateral disengagement of the projection from said second portion of the recess upon subsequent relative axial movement between the members.

Preferably a plurality of recesses are provided to locate one or a plurality of said projections. Where a plurality of said projections is provided, a portion of the one member preferably forms a lead in section for the recess and extends axially beyond further projections of said one member which form lead-in sections for further said recesses in the one member so as to locate one projection during assembly and thereby align the remaining projections with their associated recesses. A plurality of said recesses may have lead-in defining portions which extend axially beyond the portions defining the remaining lead in defining portions to locate a said projection. Preferably the extended lead-in defining portions are arranged consecutively in the rotational direction.

Preferably each said lead-in section has projection-engaging surfaces which converge towards a substantially pointed end and which lead to one recess or an adjacent recess.

Preferably the retainer section of the recess or of the remaining or selected said recesses includes a retention surface which inhibits dislocation of the or each projection from its recess as a result of any torque transmission from one said member to the other.

. The first member may form part of an assembly engageable by a clutch release fork and the second member may be axially fast with or may comprise a clutch spring hub.

The or each projection may be carried by the second member.

One arrangement of the friction clutch according to our invention includes a clutch release mechanism which requires combined axial and rotary relative movement between first and second members to interconnect the members. Clutch release forces can then be transmitted from one member to the other. In order to disengage the two members it is necessary to effect relative rotation thereof in an opposite sense which in that arrangement entails the use of a flange on one member which is grasped and rotated manually.

Whilst such an arrangement is perfectly adequate where ample room is available for the mechanic to reach the flange, there are applications where the flange would not be easy to reach. A second arrangement is disclosed herein which is intended to facilitate release of the members without having to use such a flange.

According to a further feature of the invention there is provided a clutch release mechanism comprising a first member for applying release forces to a second member to release the clutch, one of said members defining a locating recess for a projection on the other member, said projection being locatable in the recess by effecting relative movement between the members, said recess extending behind a retainer section of said one member which inhibits disengagement of the pin and recess on application of axial clutch release forces and a guide member adjacent the recess which enables the projection to enter the recess along a first patch on urging the first or second member axially towards the other and which constrains the projection to leave the recess at least partly along a second path as a result of further movement of the first or second member axially towards the other to enable the first and second members thereafter to be separated.

This arrangement enables release of the two members to be achieved by relative axial movement without having to apply any substantial manual rotary movement by means of a flange thereby simplifying dismantling of the clutch release mechanism.

Friction clutches in accordance with the invention will now be described by way of example with reference to the accompanying drawings in which :-

Fig. 1 is a cross section through part of a friction clutch in accordance with the invention,

Fig. 2 is a development of a first member of a release mechanism for clutch of Fig. 2,

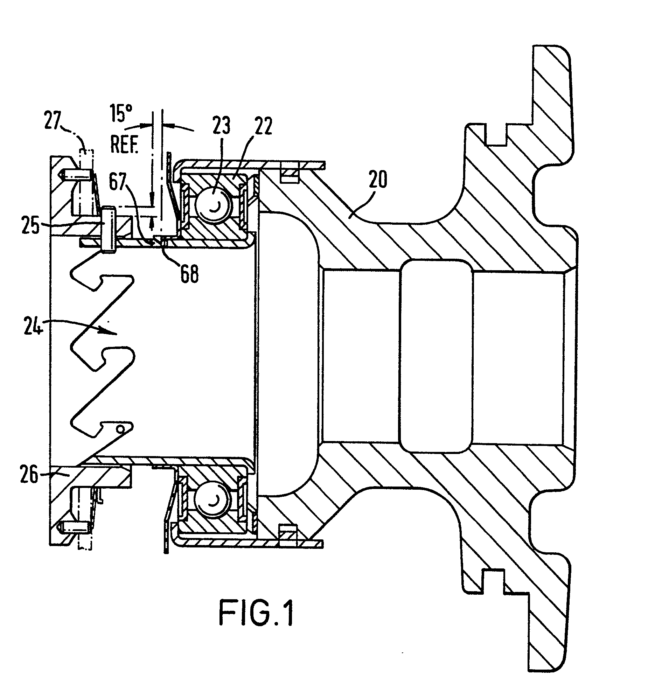

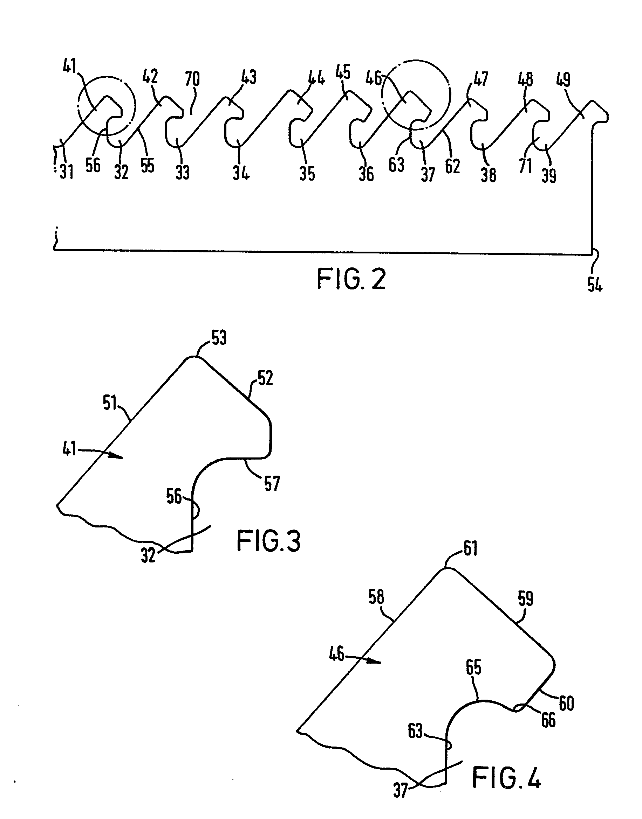

Figs. 2 and 4 are enlarged views of part of the development of Fig. 1,

Figs. 3 and 4 are enlarged views of part of the development of Fig. 2,

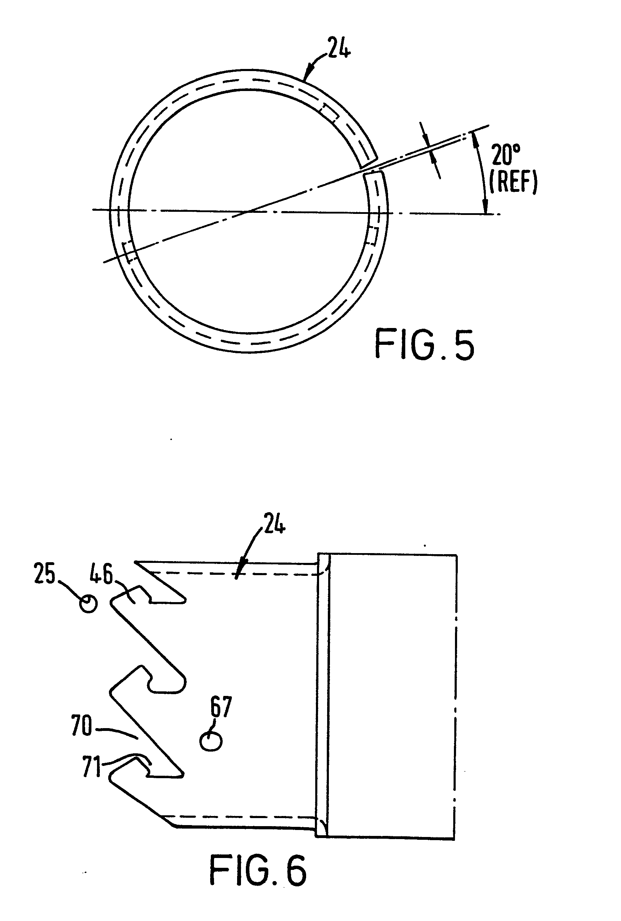

Fig. 5 is an end view of the first member, and

Fig. 6 is an elevation of the first member relative to a projection carried by a spring hub of the friction clutch.

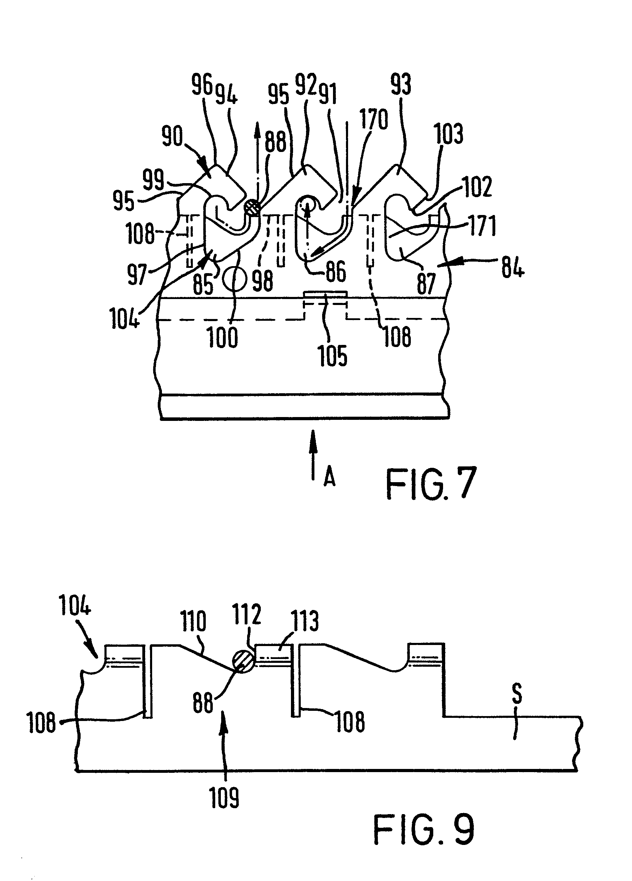

Fig. 7 is a view of part of a release mechanism for a friction clutch in accordance with the invention,

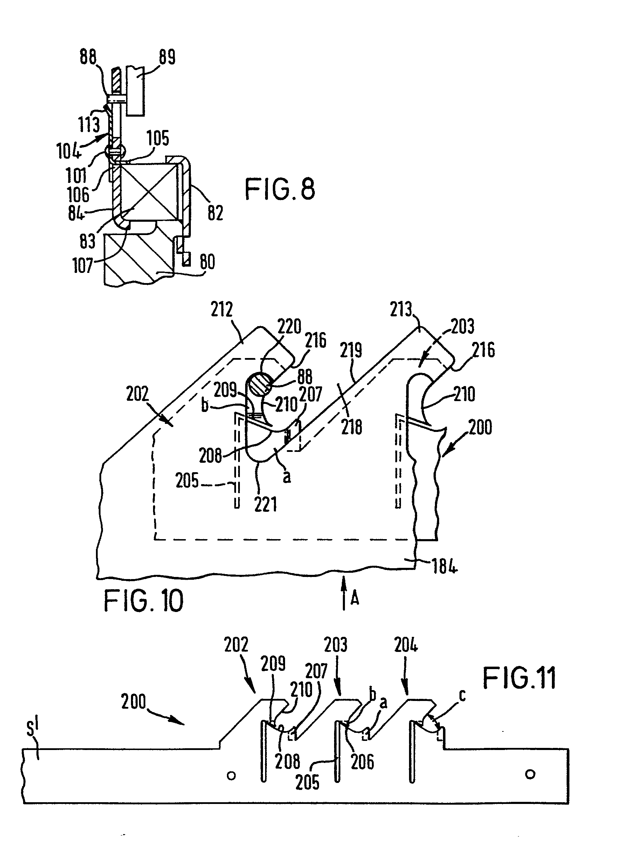

Fig. 8 is an axial cross-section of the mechanism shown in Fig. 7,

Fig. 9 is an enlarged view of part of a guide member,

Fig. 10 is a view of part of an alternative release mechanism,

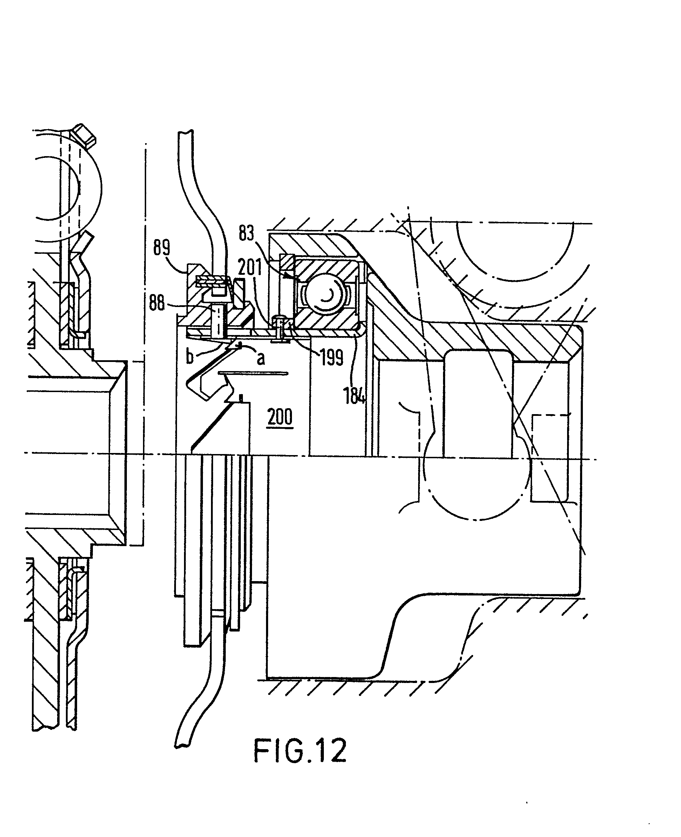

Fig. 11 is a view of a development of a guide member for the release mechanism of Fig. 10 drawn to a smaller scale,

Fig. 12 is an axial cross-section of the release mechanism of Fig. 11,

Fig. 13 is a prior art clutch arrangement.

In Fig. 1 the clutch release mechanism comprises a release fork engaging member 20 which is axially fast with an outer race 22 of a release bearing 23, and a clutch release member 24 which engages a plurality, e.g. three, of radial pins 25 which are equally spaced circumferentially around a hub 26 of a clutch diaphragm spring 27.

The clutch release member 24 is formed from sheet metal which is bent into cylindrical form, the developed sheet being shown in Fig. 2. The member is stamped into the form shown and comprises a plurality of pin retaining recesses 31 to 39 defined between lead-in fingers 41 to 49. It will be seen clearly from Fig. 2 that fingers 44, 45 and 46 project beyond the remaining fingers. As seen from Fig. 3, the finger 41 has two lead-in surfaces 51, 52 converging to a leading end 53 which is inserted axially to the left as viewed in Fig. 1 to locate the clutch release member on the pins 25. The surface 51 leads 'into recess 31 and the surface 52 leads into recess 32. The recess 31 is defined between the surface 51 and a surface 54 on finger 49 when the sheet is bent into cylindrical form. The recesses 31 to 34, 38 and 39 are identical. Recess 32 is defined between a lead in surface 55 on finger 42 and a surface 56 on finger 41. The surface 56 lies on the axis of finger 41 and terminates at its leading end at a transverse surface 57 through which clutch release forces can be transmitted. Fingers 41, 42, 43, 47, 48 and 49 are identical.

Looking at Fig. 4, the finger 46 has two lead-in surfaces 58, 59, a leading end 61 and a surface 60 parallel with surface 58. The recess 37 is defined between the lead-in surface 62 of finger 47 and a surface 63 on the finger 46. The surface 63 lies on the axis of the finger 46 and terminates at its leading end at a surface 65 which is curved so as to form a retention surface portion 66 as well as a surface through which clutch release forces can be transmitted. Fingers 44 and 45 are identical to finger 46.

The clutch release member is formed with three equi-spaced apertures 67 which locate respective inwardly directed sprags 68 ( Fig. 1) of an annular flange 69 which is used to rotate the clutch release member relative to the hub 26.

The assembly and operation of the release mechanism of the clutch will now be described.

The clutch release member 24 assembled on the bearing 23 as in Fig. 1 is inserted into the spring hub 26. The arrangement of the three consecutive extended fingers 44, 45 and 46 is such that one of them will always engage a pin 25 as the release member is moved to the left. For the purposes of this description it will be assumed that a pin engages finger 46 so that following initial engagement the pin will slip off the leading end 61 of the finger and slide either along surface 58 or surface 59. If the engaged pin 25 slides along surface 58 the pin will eventually come to rest at the blind end of recess 36 and the two other pins 25 will simultaneously enter recesses 33 and 39. If the pin 25 slides along surface 59, the pin will eventually come to rest at the blind end of recess 37 and the other pins 25 will simultaneously enter recesses 31 and 34. The axial movement of the release member 24 is combined with a slight rotational movement thereof during relative sliding movement between the surface 58 or 59 and pin 25 to facilitate entry of the pins into the recess. By utilising the three extended fingers, the release member 24 is automatically indexed giving automatic alignment of the remaining pins with their recesses.

Once the pins are located at the blind ends of the respective recesses, axial movement of the member 24 in the clutch release direction will cause the pins to engage the transverse surfaces at the opposite ends of the recesses through which releasing forces can be transmitted to the pins. Such transverse surfaces are shown at 57 and 65.

The resilience of the clutch spring 27 will normally maintain the pins against the relevant transverse surfaces. Should any unusually high torque be transmitted through the clutch release mechanism through, say, sudden clutch release there will be a tendency for the pins 25 to move circumferentially relative to the member 24. In order to prevent the pins leaving the recesses in such circumstances, the surface 66 on finger 46 or similar surfaces on the fingers 44, 45 inhibit such relative circumferential movement as the relevant pin must move axially relative to the member 24 against the bias of the clutch spring to clear the retaining surface .

To remove the clutch release member 24, the release fork is disengaged from member 20 and the bias caused by the clutch spring effectively removed. The clutch release member 24 is then rotated appropriately relative to the hub 26 by grasping the flange 69 manually and the member 24 is allowed to move axially so that the pins and recesses disengage. The clutch release member 24 can then be completely removed.

Referring to the embodiment of Fig. 7 a release fork engaging member 80 is axially fast with an outer race of a release bearing 83. The inner race of the bearing is axially fast with a clutch release member 84 which defines a plurality of recesses (three only of which 85, 86 and 87 are shown in Fig. 1). The recesses receive a plurality, e.g. three, radial pins 88 equally spaced circumferentially around a hub 89 of a clutch diaphragm spring (not shown) for a pull type clutch. As described in the above co-pending application, the clutch release member 84 is formed from sheet metal which is bent into cylindrical form.

The recesses 85, 86 are defined between lead-in fingers 90, 92, 93 each of which has two lead-in edges 94, 95. Converging to a leading end 96. The edge 95 of finger 92 leads into recess 85 which has axially extending edges 97, 98 a pin retaining concave ddge 99 and an oblique edge 100. The concave edge 99 terminates at a retention portion 102 (see finger 93) and an edge 103 extends between lead-in edge 94 and retention portion 102 parallel with lead-in edge 95 to define an entry 91.

A resilient guide member 104 is formed from a strip S of sheet metal bent into cylindrical form and is secured by rivets 101 to the inner surface of the cylindrical release member 84. As shown in Fig. 8 the guide member 104 has bent-up sprags 105 which project through apertures 106 in the release member. The inner race of the release bearing 83 is retained between an up-turned edge 107 on the release member 84 and the sprags 105. The guide member is formed with three resiliently deformable leaves 109 with axial slots 108 therebetween. Each leaf has a front surface formed with an inclined edged 110 terminating a stop edge 112 defined by an inwardly bent ramp section 113. The circumferential orientation of the guide member 104 and the release member 84 can be seen in Fig. 8.

In use the release member 84 is inserted forwardly (direction A) into the spring hub 89. As in the above co-pending application three of the fingers on the release member (fingers 90 to 93) are extended to ensure that one of them will always engage a pin on the hub. The three leaves 109 are associated with the three extended fingers. Thereafter, axial movement of the release member causes the pins 88 to enter the recesses and one such pin 88 is shown entering recess 85. The inner end of the pin 88 rides on the ramp 113 causing the associated leaf 109 to deflect inwardly. Continued forward movement of the release member causes the edge 100 and pin to interengage thereby automatically turning the release member clockwise viewed in direction A in Fig. 1. The pin eventually engages edge 97 and an opposite axial movement in the clutch release direction causes the concave edge 99 to move towards pin 88.

As it does so, the pin slips off the outer surface of leaf 109 which then snaps back into its undeflected position. Releasing forces can then be transmitted from the release member 84 to the hub 89 through pins 88.

To remove the clutch release member, the latter is urged axially forward again thereby causing the edge 110 of the leaf 109 to engage the pin 88. Continued axial movement causes the edge 110 to ride along the pin thereby effecting automatic anticlockwise rotation of the release member until the pin and stop 112 interengage as shown in Fig. 3. The pin is thereby aligned with edge 103 of finger 90 so that rearward axial movement of the release member 84 causes edge 103 to strike and ride along the pin so that the pin passes through the entry 103. The release member 23 can then be completely removed.

Reference is now made to Figures 4 to 6 which show part of a modified clutch release mechanism.

A guide member 200 is formed from a strip S of sheet metal bent into cylindrical form and is secured by rivets 201 to the inner surface of the release member 184 of the kind shown in the aforesaid co-pending application. The rivets 201 extend through a retainer eg a ring 199 which engages the inner race of bearing 83. The guide member 200 is formed with three resiliently deformable leaves 202, 203, 204 each of which comprises two independently resiliently deformable sections a, b which are separated from each other by axial slits 205 and transverse slits 206. Section a has an inwardly bent ramp section 207 and a concave edge portion 208. Section b has an inwardly bent ramp section 209 and a pin lead-out edge 210. The concave edge portion 208 and concave portion of edge 210 are arcs of equal radius struck about a common centre C.

In use, the three leaves 202, 203, 204 are associated with three fingers (two only 212, 213 of which are shown in Fig. 4) with the lead-out edges 210 in alignment with edges 216 of the fingers. As the clutch release member 84 is inserted in direction A into the spring hub 89, a pin 88 enters one of the recesses, say, recess 218 through an entry between the fingers 212, 213.

Engagement of an oblique edge 219 of finger 213 with the pin 88 causes the member 184 to rotate clockwise as it is moved forward. The pin eventually rides up ramp section 207 of section a deflecting the latter inwardly until the pin engages a concave edge 221 of member 184. The release member 184 is then moved in the clutch release direction causing the pin to disengage section a so that the latter snaps back to its undeflected condition and rides up ramp section 209 thereby deflecting section b inwardly. Eventually the pin engages a pin retaining concave edge 220 on finger 212. Releasing forces can then be transmitted from the release member 184 to the hub 89 through the pins 88.

To remove the clutch release member, the latter is moved axially in direction A again thereby causing the section b to slide beneath the pin until the latter engages concave edge 208 of section a.    The edge 208 causes the release member 184 to turn anticlockwise as the latter is urged further in direction A whereby the pin slips over the lead-out edge 210 of section b of the leaf 202.    The release member 84 is then withdrawn in the direction opposite to A and the lead-out edge 210 causes the release member to turn anticlockwise whereby the pin 88 rides along the edge 210 and edge 216 to clear the finger 212.    The release member 23 can then be completely removed.

In this description the first portion 70 or 170 of the each recess extends from one edge of the member defining the recess, the second portion of the recess 71 or 171 including the retainer surface 57, 99 or 220 to inhibit disengagement of the projection from the recess, the second portion being at a larger angle to the axis of the clutch along which the friction plate is pressed into and withdrawn away from engagement with an engine-driven rotatable part.    As best seen in Fig. 3, the body end 53 will normally lie in the same plane as surface 56.

The Left Hand upward arrow as seen in Fig. 7 is the relative disassembly direction of the projection whilst the Right Hand downwardly directed arrow shows the relative and assembling direction.

CLAIMS:

1.    A friction clutch for a vehicle comprising a friction plate, means to press the friction plate in a first direction parallel to the clutch axis, clutch release means, and pull means to withdraw the clutch release means in a direction opposed to said first direction characterised in that the clutch release means (20, 80) includes first and second members (24,26,84,89), one of the members (24,84) defining a recess (31-39, 85-87), the other of the members (26) including a projection (25,88), the projection (25,88) being receivable in the recess upon relative axial movement between the members, the recess having a first portion (70,170) extending from one edge of the member at an angle to the said axis and a second portion (71,171) at a larger angle to said axis, said second portion (71,171) including a retainer surface (57, 99, 220) to inhibit disengagement of the projection from the recess on application of axial pull clutch forces, the second portion being dimensioned to permit lateral disengagement of the projection from said second portion of the recess upon relative axial movement between the members.

2.    A friction clutch according to Claim 1 characterised in that the said one of the members (24,84) is a cylindrical member and has a plurality of recesses (31-39, 85-87), each recess having a lead-in section (41-49, 90-92, 93).

3.    A friction clutch according to Claim 2 characterised in that the lead-in section for three consecutive adjacent recesses (44-46) extends axially in said first
direction beyond the lead-in sections for the other
recesses.

4.      A friction clutch according to Claim 3 characterised in that each lead-in section (41-49( includes a pair
of surfaces (58,59, 94,95) convergins in said first
direction towards a substantially pointed end (53,96),
one of said pair of suraces (58,94) leading to one recess
and the second of said pair of surfaces (59,95) leading
to an adjacent recess.

5.      A friction clutch according to any of Claims 1
to 4 characterised in that means are provided to permit
said lateral disengagement manually.

6.      A friction clutch according to any of Claims 1
to 4 characterised in that a guide member (104,200) is
located adjacent each said recess, said guide member
(104,200) defining a first path along which the projection
(58) is receivable in the recess (85-87) and a second path
along which the projection is disengaged from the recess.

7.      A friction clutch according to Claim 6 characterised in that the guide member (104,200) effects lateral
disengagemet of a projection from said second portion
(171) of the recess (85-87).

8.      A friction clutch according to Claim6 or Claim 7
characterised in that the second path terminates adjacent
one end of said first portion (170), the projection (88)
being aligned with said one end upon disengagement from
the second portion (171) to permit disconnection of the projection from the recess.

9.     A friction clutch according to Claim 8 characterised in that the guide member is resilient (104,200), the guide member including a surface (109,207,209) over which the projection (88) passes along said first path and an edge (110,208) which the projection engages along said second path.

10.     A friction clutch according to  Claim 1 characterised in that the first member is part of an assembly (20,80) engageable by a clutch release fork and the second member is axially fast with a clutch spring hub (26,89).

0167287

FIG.1

FIG. 2

FIG.3

FIG.4

FIG.5

FIG.6

FIG. 7

FIG. 9

FIG. 8

FIG. 10

FIG. 11

FIG.12

FIG.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-2 337 281 (FERODO) <br> * Page 10, line 35 - page 11; figures 15,16 * | 1,2,5 | F 16 D 23/14 |
| | --- | | |
| A | DE-A-1 575 221 (J. McCARTHY) <br> * Whole document * | 1,5-7 | |
| | --- | | |
| A | GB-A-2 099 102 (D. KOLB) <br> * Whole document * | 1,5,10 | |
| | --- | | |
| A | FR-A-2 304 826 (FERODO) <br> * Page 5, lines 34-40; page 9; figures 6,7 * | 1,10 | |
| | --- | | |
| A | GB-A-1 069 300 (N.E. BASSETT) <br> * Whole document * | 1 | **TECHNICAL FIELDS SEARCHED (Int. Cl. 4)** |
| | --- | | |
| A | FR-A-2 533 281 (P. RENAUD) | | F 16 D <br> F 16 B |
| | --- | | |
| A | DE-A-3 113 463 (R. HÖNEMANN) | | |
| | --- | | |
| A | GB-A-1 478 920 (R.A. NIX et al.) | | |
| | ----- | | |

The present search report has been drawn up for all claims

| Place of search <br> THE HAGUE | Date of completion of the search <br> 12-09-1985 | Examiner <br> BEGUIN C.P. |
|---|---|---|